# EUROPEAN PATENT APPLICATION

(11) **EP 1 837 639 A1**
(43) Date of publication of application: **26.09.2007**
(21) Application number: 06290524.5
(22) Date of filing: 23.03.2006
(51) Int. Cl.: G01M 17/02, B60C 23/06

(54) **Method for detecting structural modifications of a tyre belt**

(71) Applicant: Société de Technologie Michelin, 63000 Clermont-Ferrand (FR); Michelin Recherche et Technique S.A., 1763 Granges-Paccot (CH)
(72) Inventor: Myatt, David, Pompignat 63119 Chateaugay (FR)
(74) Representative: Bauvir, Jacques

(57) **Abstract**

The invention consists in a method for detecting structural modifications of a belt of a tyre (10) consisting of at least two plies (50,60) including conductive cords (51,61), the method comprising the following steps : (A) exposing the tyre to a high frequency electromagnetic field suitable for electromagnetically exciting the belt ; (B) monitoring the electromagnetic response of the belt of the tyre ; (C) comparing the monitored response to a pre-recorded reference response corresponding to a tyre of the same type but comprising a belt that has not undergone any structural modifications; (D) identifying a structural modification of the belt if the difference between the monitored response and the reference response exceeds a predefined threshold.

## Description

### FIELD OF INVENTION

The present invention concerns a method for detecting structural modifications of a belt of a tyre, and in particular for detecting the separation of breaker plies of a tyre.

### DEFINITIONS

In the present document:

"cord" is understood to mean a single thread or wire, metallic or non metallic, or an assembly of several threads or wires ;

"ply" refers to a layer of parallel reinforcing cords, metallic or non metallic, woven or unwoven, and embedded in a rubber composition, the thickness of the ply being close to the diameter of an individual cord ; "breaker ply" refers to a ply of the breaker belt ;

"belt" refers to an assembly of at least two plies that is unanchored to the bead;

"axial" refers to a direction essentially parallel to the rotation axis of a tyre;

"radial" refers to a direction parallel to a vector perpendicular to the axial direction and which intersects the rotation axis of the tyre;

"tyre" refers to pneumatic or non pneumatic tyres.

### BACKGROUND OF INVENTION

Structural modifications of a belt of a tyre, and in particular separation of the plies of a tyre's breaker belt (hereafter referred to as "ply separation") are a well-known mode of failure. Tyres may be subject to this failure mode as a consequence of manufacturing problems (presence of contaminants, incomplete curing process, ...) or when used under extreme conditions for which the tyre has not been designed (low inflation pressure, high speeds, excessive loads ...).

Ply separation is mostly initiated by the formation of a crack close to the ends of the cords forming the breaker belt ; local mechanical stress and heating that results from it then facilitate the propagation of the crack between the plies. As soon as the crack size exceeds a certain size (which depends on the tyre architecture and the conditions of use) the crack propagates in a catastrophic manner which entails the partial or total decohesion of the tyre crown, causing an abrupt reduction of the circumferential, axial and radial rigidities of the tyre. The vehicle could start vibrating and in extreme cases, the driver may even lose control.

There have been many propositions to reduce the risk of ply separation by means of improved tyre architectures. An example can be found in patent US 6,640,861 which discloses a crown structure capable of containing the phenomena of separation of the lateral ends of the plies forming the breaker belt.

However, even tyres with improved architectures may undergo ply separation when used under conditions for which they have not been designed. It may therefore be useful to have means for detecting ply separation even at an early stage.

Many of the methods known in the art require the tyre to be mounted on a particular testing device. This may easily be done e.g. when the tyre is inspected for ply separation before retreading.

A device for detecting separation of the plies of a tyre carcass has been disclosed in patent US 2,909,060. The tyre is placed within an inspection chamber and subjected to a partial vacuum. If there are any areas of separation between the several plies of the carcass, these areas can be detected due to the bubbles or raised areas which are formed either within or outside of the casing as the air trapped between said plies expands within the partial vacuum. The detection of raised areas can also be carried out by mechanical means, as taught in patent US 3,303,571, or by interferometric analysis (see WO 8401998).

US 3,604,249 describes an apparatus and method for testing pneumatic tyre casings while the inflated tyre is mounted on a wheel. A vibration source in contact with the exterior surface of the tyre is caused to vibrate at the natural resonance frequency of the mounted tyre. A detector sensitive to the vibration of the tyre is in contact with a different region of the exterior surface of the tyre. The vibrator and detector positions are maintained constant with respect to one another while they are both moved relative to the tyre circumference thereby checking the vibration transmission characteristic of the entire tyre. Ply separation is evidenced by a substantial change in the detected vibration. Other non destructive methods such as the use of X-rays have also been proposed (see, for example, US 3,698,971). US 5,559,437 describes a method wherein the metallic reinforcement elements of the tyre are magnetized and changes of the magnetisation are analysed.

Devices for detecting ply separation can also be provided on board of the vehicle on which the tyre is mounted, which makes it possible to detect ply separation *in situ.*

Patent application US 2003/0188579 teaches the use of a piezoelectric-based device sensing ultrasonic transmissions generated by the tyre in the ground contact area.

US 2005/0045257 discloses a tyre "breakdown warning device" including at least one temperature sensor embedded in the vicinity of at least one end of at least one tyre constituent which is vulnerable to break down, and providing a warning when a breakdown of the tyre is found on the basis of the measured temperatures.

The aim of the present invention is to provide another method for detecting structural modifications of a belt of a tyre that may be used on board a vehicle equipped with the tyre. This objective is met by a method for detecting structural modifications of a tyre belt consisting of at least two plies including conductive cords, the method comprising the following steps :
(A) exposing the tyre to a high frequency electromagnetic field suitable for electromagnetically exciting the belt ;
(B) monitoring the electromagnetic response of the belt of the tyre ;
(C) comparing the monitored response to a pre-recorded reference response corresponding to a tyre of the same type but comprising a belt that has not undergone any structural modifications;
(D) identifying a structural modification of the belt if the difference between the monitored response and the reference response exceeds a predefined threshold.

"Electromagnetic response" is understood to comprise both the active and the passive response of the belt ; it can consist in the building up of an electromagnetic field, in a characteristic absorption behaviour, or in a combination of both. The electromagnetic response is due to the fact that the inductive, capacitive and resistive elements forming the belt are excited.

The reference response may consist in a signal obtained beforehand on another tyre of the same type comprising a belt that has not undergone any structural modifications.

The comparison between the monitored response and the reference response may consist in the comparison of characteristic values such as the field strength generated by the belt after illumination or the reflectance at a given frequency.

The structural modifications that can be detected by the method according to the invention encompass ply separation, breaking of cords, ageing of the rubber layer separating the cords, and any other modification that alter the electromagnetic response emitted by the breaker belt.

Electromagnetic radiation of a frequency situated between 0,1 and 100 MHz is particularly suitable for use in the method according to the invention. This large frequency range allows to take into account the size of the tyre, which does affect their electromagnetic absorption.

According to a preferred embodiment, the method is applied when the tyre is in rotation, which allows to reliably screen the whole tyre belt for structural modifications. If the tyre is not rotated, very local structural modifications that do not modify the monitored response in the region that is excited by the electromagnetic field may not be detected. The rotation of the tyre may be obtained by carrying out the method when the tyre is rolling or when the tyre is mounted on a rotary device.

The method according to the invention may be carried out on a tyre that is mounted on a vehicle. The exposure of the tyre to an electromagnetic field and the detection of the electromagnetic response emitted by the tyre may be carried out by means external to the vehicle that are brought to the vicinity of the tyre, such as a handheld device. This may be particularly advantageous for routine verifications in vehicle fleets or in traffic security controls where the vehicles to be checked are not equipped with any particular detecting device.

Alternatively, the exposure of the tyre to an electromagnetic field and the detection of the electromagnetic response emitted by the tyre may be carried out by means that are integral with the vehicle. This allows the steps (A) to (D) to be carried out continuously during the operation of the vehicle. In order to overcome spurious events due to sudden changes in the rolling conditions (impacts on the tyre ...), it may then be necessary to average the response signal over a certain time in order to distinguish real structural modifications of the belt. The determination of the averaging procedure and the adaptation of the necessary averaging conditions can be determined by the person skilled in the art through routine operations.

In this configuration the reference response may correspond to the monitored response of the very same tyre on the very same vehicle, determined at an earlier time or to a time average over this monitored response. Any sudden change in the monitored response is interpreted as structural damage to the belt.

According to a preferred embodiment, an alert signal is generated if a structural modification of the belt is identified.

If the vehicle is a manned vehicle, the alert signal may be brought to the attention of the driver by visual and/or acoustic means.

If the vehicle is equipped with a device for controlling the dynamic behaviour of the vehicle (such as, for example, an ABS or a ESP system) the alert signal may be used to trigger the device to limit the speed of the vehicle or to bring the vehicle to stop.

It goes without saying that the method according to the invention can also be applied as a routine verification of tyre carcasses to be retreaded.

### BRIEF DESCRIPTION OF THE DRAWINGS

The invention may be better understood by reference to the detailed description which follows and to the drawings, in which :
- figure 1 is a schematic view of a pneumatic radial tyre ;
- figure 2 is a schematic representation of the lattice formed by the cords of two breaker plies ;
- figure 3 is a schematic representation of a resonant circuit formed by the cords of two adjacent breaker plies ;
- figure 4 is a schematic representation of the resonant circuit corresponding to the arrangement of figure 3 ;
- figure 5 is a schematic representation of a device for detecting ply separation ;
- figures 6 and 7 show signals obtained for a new tyre and a tyre having undergone ply separation.

### DESCRIPTION OF PREFERRED EMBODIMENTS

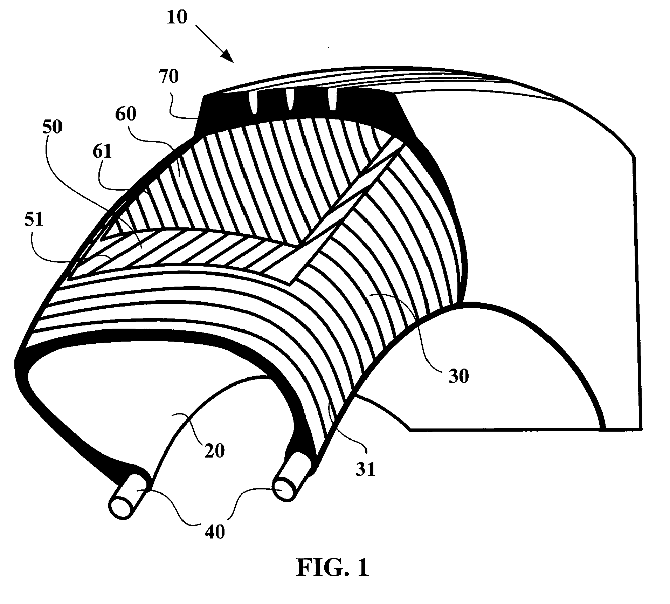

Figure 1 schematically represents the structure of a radial pneumatic tyre 10 comprising an inner liner 20 made of airtight synthetic rubber, a carcass ply 30 composed of textile or steel cords 31, laid down in straight lines and sandwiched in rubber, bead wires 40 holding the tyre 10 onto the rim (not illustrated), a breaker belt made of at least two radially adjacent breaker plies 50 and 60, and a tread 70 laid over the breaker plies 50 and 60 to be in contact with the road. Each of the two breaker plies 50 and 60 of tyre 10 is reinforced with steel cords 51 and 61 that are inclined with respect to the equatorial plane of the tyre at an appropriate angle (typically around 20°), the cords 51 of one ply being inclined oppositely to the cords 61 of the other ply.

This particular arrangement of the plies comprised in the breaker belt explains the strong absorption of an electromagnetic field in the belt. As schematically represented in figure 2, the sets of cords 51 and 61 of the adjacent plies 50 and 60 form a lattice comprising a great number of elementary 80 and composite 90 parallelograms.

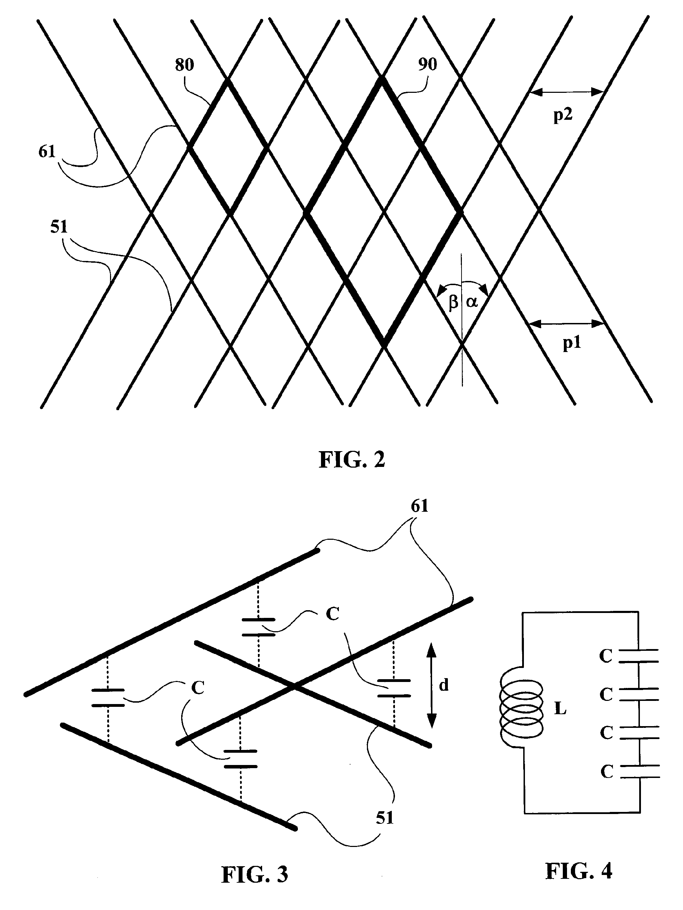

As shown in figure 3, each of these parallelograms constitutes a resonant circuit : the four sides of the parallelogram formed by parts of cords of the belt can be considered as a loop of inductance L, whereas the cord-rubber composition-cord interface at each of the angles of the parallelogram constitutes a capacity C. Figure 4 shows the equivalent LC circuit.

As it is well known, a resonant circuit can be excited by an electromagnetic field of a frequency that is close to its resonant frequency. The more circuits are excited, the stronger an electromagnetic field is absorbed. The great number of circuits of varying shapes (and, therefore, of varying inductance L) present in the belt of a tyre explains the fact that the absorption function is of complex shape. Its characteristics are influenced by the nature of the cords 51 and 61, the number and structure of plies 50 and 60, the distance d between adjacent breaker plies 50 and 60, resistivity of the rubber composition used in the breaker plies 50 and 60, the inclination alpha (α) and beta (β) of the cords 51 and 61 of the breaker plies 50 and 60 with respect to the circumference of the tyre 10, the pitch p1 and p2 of the breaker plies, the diameter and the high frequency conductivity of metallic cords 51 and 61 etc.

It follows from what has been said that partial or total separation of plies immediately results in a significant modification of the capacity and resistivity of at least some of the resonant circuits formed by the breaker belt. This modification entails a change of the absorption of electromagnetic energy by the belt : the tyre's electromagnetic signature is therefore modified.

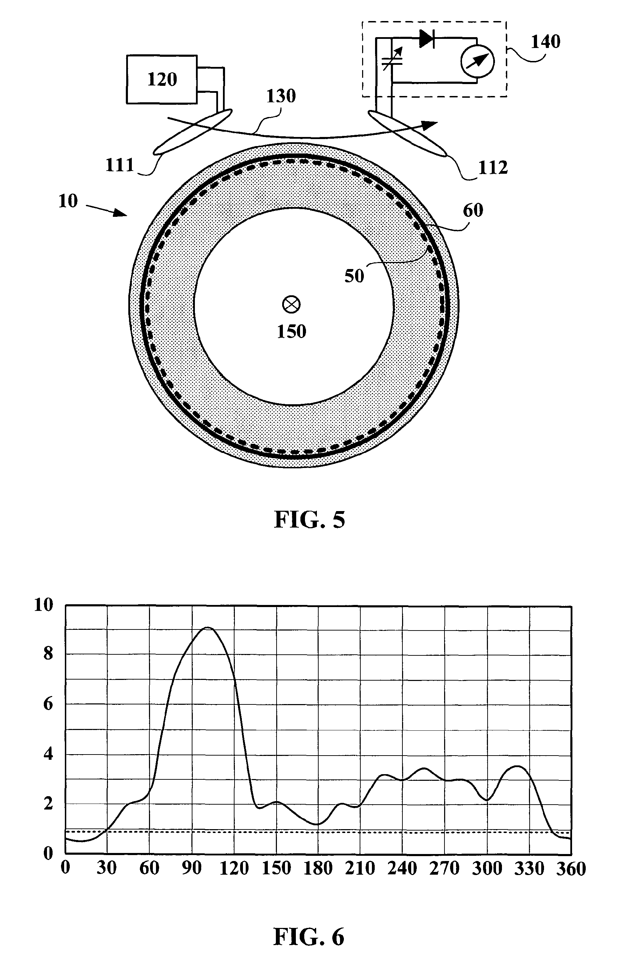

A very simple device taking advantage of this fact for detecting ply separation is shown in figure 5. The device comprises two loops : a first loop 111, designed for exciting the belt with an appropriate frequency, and a second loop 112 for measuring the absorbed energy. When the oscillator 120 is activated, loop 111 produces an electromagnetic field (represented by the field line 130). This field penetrates the second loop 112 and creates an electric current that is detected by a detecting unit 140.

When a tyre 10 is brought close to loop 111, the electromagnetic field 130 will couple to the metallic belt formed by the plies 50 and 60 and excite the belt, which leads to absorption of electromagnetic energy. Such absorption has been observed, for example, by US 2003/0156067. As a consequence, the amount of energy detected by the detecting unit 140 is reduced in a characteristic way. It is therefore possible to obtain the "signature" of a tyre having an intact breaker belt. A tyre having undergone ply separation has a significantly different signature and can easily be detected by inspection of the absorption pattern detected in the detecting unit 140.

In order to detect local ply separation, it may be necessary to rotate the tyre with respect to loop 111 (preferably around the tyre's axis 150), such as to expose all parts of the breaker belt to the electromagnetic field 130. Of course a device as depicted in figure 5 could very easily be integrated in a vehicle, thereby allowing *in situ* detection of ply separation.

The data shown in figure 6 have been obtained by rotating the tyre 10 around its axis. The graph shows the field strength detected as a function of the angle of rotation for a tyre having undergone ply separation. The field strength sharply increases when the region where the ply has separated is exposed to the electromagnetic field. It should be noted that the field strength detected for the same type of tyre with an intact breaker belt is lower than 1 Volt on a scale of 0 to 10 Volts of rectified RF energy for all the angles of rotation, which has been indicated by the dashed line. The data have been obtained with the simple arrangement of figure 5, by illuminating the tyre with a 3 turn coil resonating at 12 MHz. Detection was obtained with a differential 2 turn coil tuned to 36 MHz. This arrangement is only suggested as an elementary method of demonstrating the potential of this electromagnetic inspection technique.

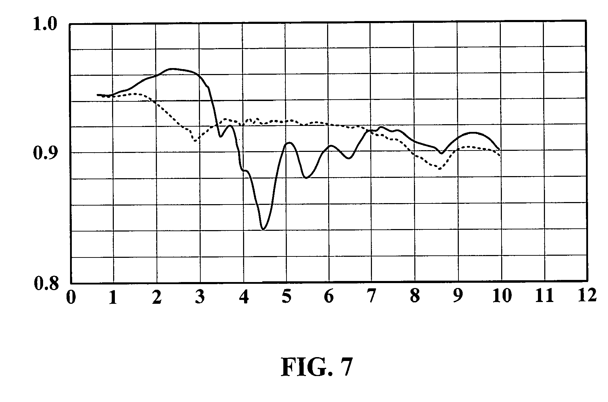

The person skilled in the art knows that other ways of obtaining the electromagnetic signature of the breaker belt are available. Figure 7 shows measurements of the reflectance of tyres as a function of the frequency (in MHz) of an electromagnetic field that is reflected. The more the value departs from 1 the more energy is absorbed in the belt. The graphs allows direct comparison of a tyre having an intact breaker belt (dashed line) and a tyre having undergone ply separation. It can be seen that the reflectivity of an intact belt is an almost monotonous function of the radiation frequency whereas the signal obtained from a tyre having undergone ply separation is much more structured, its reflection behaviour being resonant-like. A frequency scan therefore allows to easily detect ply separation.

## Claims

1. Method for detecting structural modifications of a belt of a tyre (10) consisting of at least two plies (50,60) including conductive cords (51,61), the method comprising the following steps :
(A) exposing the tyre to a high frequency electromagnetic field suitable for electromagnetically exciting the belt ;
(B) monitoring the electromagnetic response of the belt of the tyre ;
(C) comparing the monitored response to a pre-recorded reference response corresponding to a tyre of the same type but comprising a belt that has not undergone any structural modifications;
(D) identifying a structural modification of the belt if the difference between the monitored response and the reference response exceeds a predefined threshold.

2. Method according to Claim 1, **characterised in that** the reference response is obtained beforehand on another tyre.

3. Method according to any of the preceding Claims, **characterised in that** the frequency of the electromagnetic field to which the tyre (10) is exposed is situated between 0,1 and 100 MHz.

4. Method according to any of the preceding Claims, **characterised in that** the method is applied when the tyre (10) is in rotation.

5. Method according any of the preceding Claims, **characterised in that** the method is carried out on a tyre (10) that is mounted on a vehicle.

6. Method according to Claim 5, **characterised in that** the exposure of the tyre (10) to an electromagnetic field and the detection of the electromagnetic response emitted by the tyre is carried out by means external to the vehicle that are brought to the vicinity of the tyre.

7. Method according to Claim 5, **characterised in that** the exposure of the tyre (10) to an electromagnetic field and the detection of the electromagnetic response emitted by the tyre is carried out by means that are integral with the vehicle.

8. Method according to Claim 7, **characterised in that** steps (A) to (D) are carried out continuously during the operation of the vehicle.

9. Method according to Claim 8, **characterised in that** the reference response corresponds to the monitored response of the very same tyre on the very same vehicle, determined at an earlier time.

10. Method according to Claim 8, **characterised in that** the reference response corresponds to a time average over the monitored response of the very same tyre on the very same vehicle.

11. Method according to Claim 7 to 9, **characterised in that** an alert signal is generated if a structural modification of the belt is identified.

12. Method according to Claim 11, **characterised in that** the vehicle is manned and **in that** the alert signal is brought to the attention of the driver by visual means.

13. Method according to Claim 11 or 12, **characterised in that** the vehicle is manned and **in that** the alert signal is brought to the attention of the driver by acoustic means.

14. Method according to any of Claims 11 to 13, **characterised in that** the vehicle is equipped with a device for controlling the dynamic behaviour of the vehicle and **in that** the alert signal triggers the device to limit the speed of the vehicle.

15. Method according to any of Claims 11 to 13, **characterised in that** the vehicle is equipped with a device for controlling the dynamic behaviour of the vehicle and **in that** the alert signal triggers the device to bring the vehicle to stop.
